# EUROPÄISCHE PATENTSCHRIFT

(11) **EP 0 952 337 B1**
(45) Veröffentlichungstag und Bekanntmachung des Hinweises auf die Patenterteilung: **12.03.2003**
(21) Anmeldenummer: 99107512.8
(22) Anmeldetag: 15.04.1999
(51) Int. Cl.: F03D 7/02

(54) **Windenergieanlage mit Windnachführung**
System for orienting wind turbine into the wind
Dispositif de maintien d'une éolienne orientable dans la direction du vent

(30) Priorität: 19.04.1998 DE 19817256
(43) Veröffentlichungstag der Anmeldung: 27.10.1999
(73) Patentinhaber: aerodyn Engineering GmbH, 24768 Rendsburg (DE)
(72) Erfinder: Böhmecke, Georg, 24768 Rendsburg (DE)
(74) Vertreter: Biehl, Christian, Dipl.-Phys.

(56) Entgegenhaltungen:
- DD-A- 299 200
- DE-A- 3 008 379

## Beschreibung

Die Erfindung betrifft eine Windenergieanlage mit Windnachführung nach dem Oberbegriff des Hauptanspruchs.

Bei derartigen Windenergieanlagen muß die wenigstens im wesentlichen horizontal angeordnete Rotorachse ständig in Abhängigkeit von einem zeitlichen Mittelwert der Windrichtungen zu dieser mittleren Windrichtung ausgerichtet werden, um den Energieertrag zu maximieren und die mechanische Belastung der Anlage zu minimieren. Eine gute Nachführung der Rotorachse ist somit für den Energieertrag und die Lebensdauer der Anlage von größter Bedeutung.

Mit zunehmender Anlagengröße steigen die zur Verstellung erforderlichen Drehmomente überproportional an, nämlich mit der dritten Potenz des Rotordurchmessers. Mit der Größe der Anlage steigen damit die Anzahl und/oder die Größe der Antriebe drastisch an.

Aus der DE 30 08 379 ist eine Windkraftanlage bekannt, die mit Linearantrieben versehen ist. Die Linearantrieben wirken auf Zangen, die auf kraftschlüssig in einen mit der Gondel verbundenen Formring eingreifen.

Aus der DD 299 200 A5 ist eine Windkraftanlage bekannt, bei der der Rotorkopf mittels annähernd radial wirkenden hydraulischen Stellzylindern nachgeführt wird.

Der Erfindung liegt die Aufgabe zugrunde, die Mittel zum Verstellen der Ausrichtung der Gondel zum Turm so auszubilden, daß sie den sich stellenden Anforderungen genügen.

Erfindungsgemäß wird diese Aufgabe durch die Merkmale des Anspruchs 1 gelöst. Der Unteranspruch gibt eine vorteilhafte Ausgestaltung der Erfindung an.

Zwischen dem Turm und der darauf drehbar angeordneten Gondel sind zumindest zwei Linearantriebe, vorzugsweise Hydraulikzylinder, angeordnet, die mit einem formschlüssigen Kraftübertragungselement, vorzugsweise einer Pratze, verbunden sind, so daß durch die Betätigung der Antriebe eine Bewegung der Pratze stattfindet. Die Linearantriebe und die Pratze sind dabei entweder mit der Gondel oder mit dem Turm fest verbunden.

Die Pratze greift wiederum mit ihrem formschlüssigen Teil in einen entsprechend geformten Ring ein, der mit dem Turm bzw. mit der Gondel verbunden ist. Bei Betätigung der Linearantriebe findet damit eine Relativdrehbewegung der Gondel zu dem Turm statt.

Wegen der Begrenzung des möglichen Weges der Linearantriebe kann jeweils nur eine eingeschränkte Winkelbewegung durchgeführt werden. Dies wird dadurch ausgeglichen, daß nach Erreichen der einen Endlagenseite der Linearantriebe die Pratze aus dem Formschluß herausgezogen wird und die Linearantriebe auf die andere Endlage gefahren werden. Danach werden die Pratzen wieder in den formschlüssigen Eingriff gefahren.

Um ein Verfahren der Gondel während des Umsetzvorgangs durch äußere Kräfte zu vermeiden, können zusätzlich mechanische Bremsen vorgesehen sein, es kommt jedoch auch eine verspannte Gleitlagerung in Betracht.

Die Erfindung wird im folgenden anhand einer Zeichnung erläutert. Dabei zeigt:
- Fig. 1: eine konstruktive Darstellung des Systems in einer Ansicht von unten,
- Fig. 2: eine grob-schematische Darstellung der Mittel zum Verstellen des Drehwinkels der Gondel zum Turm und
- Fig. 3: eine weitere Ausführungsform wie Fig. 1 ohne radiale Antriebe.

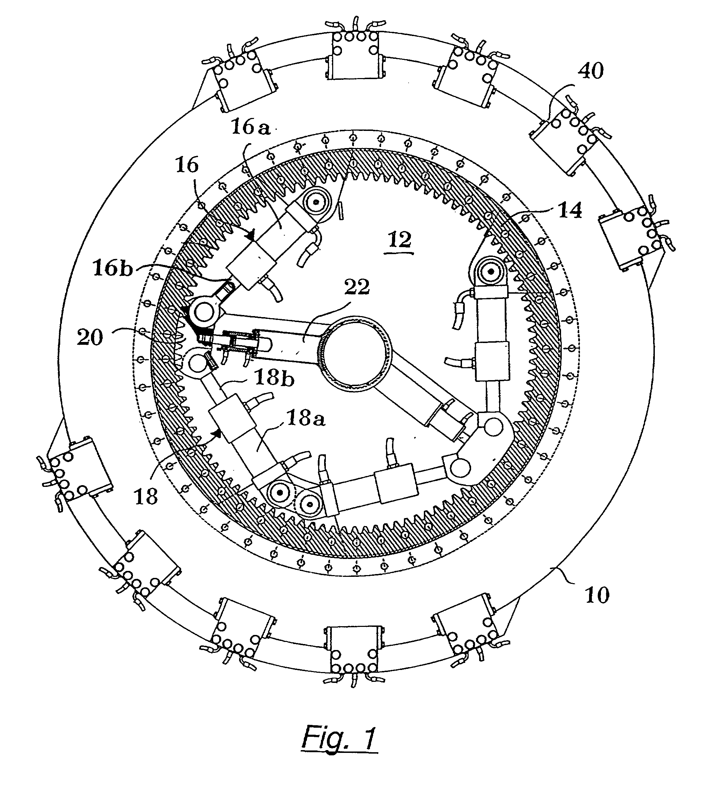

Die Darstellung von Fig. 1 zeigt das Azimutsystem, also die Ausgestaltung, die ein Verstellen der Gondel 12 relativ zum Turm 10 erlaubt. Diese besteht aus einem am Turm 10 befestigten Formring 14 und zwei Paaren winklig zueinander angeordneten Linearantrieben 16, 18, deren eine Teile 16a, 18a um eine vertikale Achse verschwenkbar an die Gondel 12 angelenkt sind. Die anderen Teile 16b, 18b jedes der ein Paar bildenden Linearantriebe 16, 18 ist um eine vertikale Achse verschwenkbar an eine Pratze 20 angelenkt, die in dem in Fig. 1 dargestellten Betriebszustand der Linearantriebe 16, 18 in den Formring 14 eingreift.

Jedem der beiden Paare von Linearantrieben 16, 18, ist in diesem Ausführungsbeispiel ein dritter Linearantrieb 22 zugeordnet, der radial auf die zugehörige Pratze 20 wirkt.

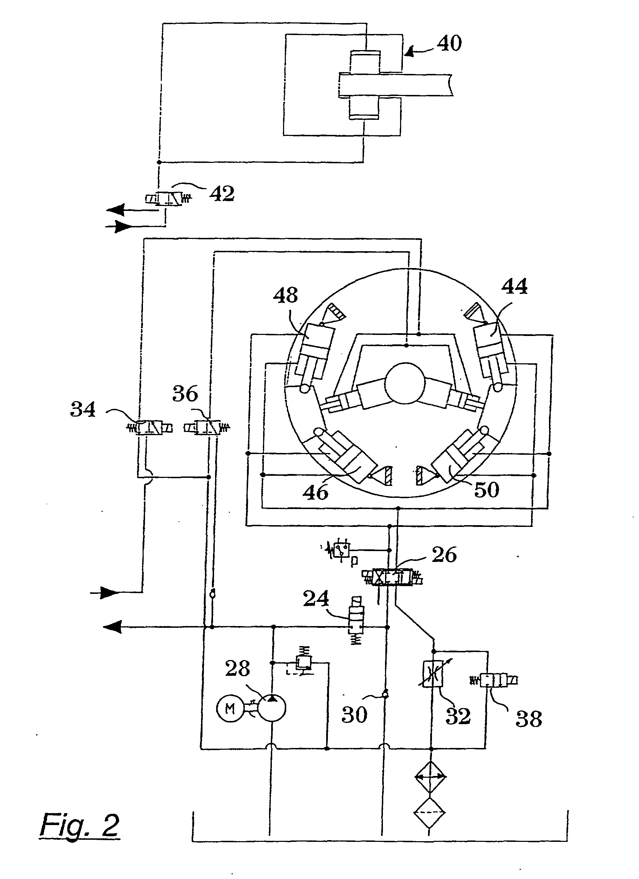

Die Darstellung in Fig. 2 macht deutlich, wie die das Azimut-Antriebssystem bildenden Linearantriebe 16, 18 hydraulisch angesteuert werden.

Ein zum Aufschalten der Hydraulikpumpe auf das Azimut-Antriebssystem dienendes Sitzventil 24 ist bei Freilauf der Gondel geschlossen. Ein 4/3-Wege-Ventil 26 bestimmt die Bewegungsrichtung der Zylinder.

In der nach rechts geschobenen Position des Ventils 26 können die Verfahrzylinder 44 und 46 ausfahren und die Zylinder 48 und 50 einfahren. Die Gondel wird dann links herum gedreht.

In der nach links geschobenen Stellung des 4/3-Ventils 26 verläuft ein umgekehrter Verfahrvorgang. Die Zylinderräume werden über die Pumpe 28 gefüllt. Wenn die Pumpe 28 nicht in Betrieb ist, können die Zylinder Öl über das Rückschlagventil 30 ansaugen. Die anderen Zylinder können sich über das Zweiwege-Stromventil 32 entleeren. Dieses Ventil 32 wird so eingestellt, daß eine gleichmäßige Schwenkbewegung erreicht wird. Es verhindert, daß die Verstellgeschwindigkeiten einen vorgegebenen Wert übersteigt.

Bei dem Verfahren der Gondel drücken die radialen Linearantriebe 22 die Pratze 20 in den Formring 14. Wenn die Pratze 20 in dem als Zahnkranz ausgebildeten Formring 14 umgesetzt werden soll(en), wird die Pumpe 28 entsprechend betätigt, die Ventile 24 und 26 werden zum Verlegen der die einen Teile der Linearantriebe 16, 18 bildenden Verfahrzylinder entsprechend geschaltet.

Die radial angeordneten Linearantriebe 22 werden so betätigt, daß die Pratzen 20 nach innen gezogen werden, wozu die zu der Pratze weisenden Zylinderräume über das 3/2-Wege-Ventil 34 mit hohem Druck beaufschlagt wird. Die Entleerung der der Pratze 20 abgewandten Zylinderräume erfolgt über das Ventil 36.

Um bei dem Nachsetzen der Pratze 20 nicht gegen das Zweiwege-Stromregelventil 32 arbeiten zu müssen und um höhere Verstellgeschwindigkeiten zu ermöglichen, wird dieses Ventil durch das Sitzventil 38 überbrückt.

Azimutbremsen 40 sind über ein 3/2-Wege-Ventil 42 an ein sehr hohes hydraulisches Druckniveau angeschlossen. Alle Azimutbremsen 40 sind parallel geschaltet. Wenn die Azimutbremsen 40 ausfallen, wird das Ventil von dem Betriebsführungsrechner geschlossen gehalten. Das Antriebssystem kann somit jedenfalls in eingeschränktem Ausmaß die Funktion einer Halteeinrichtung übernehmen.

Es versteht sich, daß andere technische Ausgestaltungen denkbar sind, nämlich solche, bei dem die Bremsfunktion über ein verspanntes Gleitlager erfolgt.

Anders als bei dem dargestellten Ausführungsbeispiel können die Zylinderräume der Linarantriebe auch einzeln ansteuerbar ausgebildet sein.

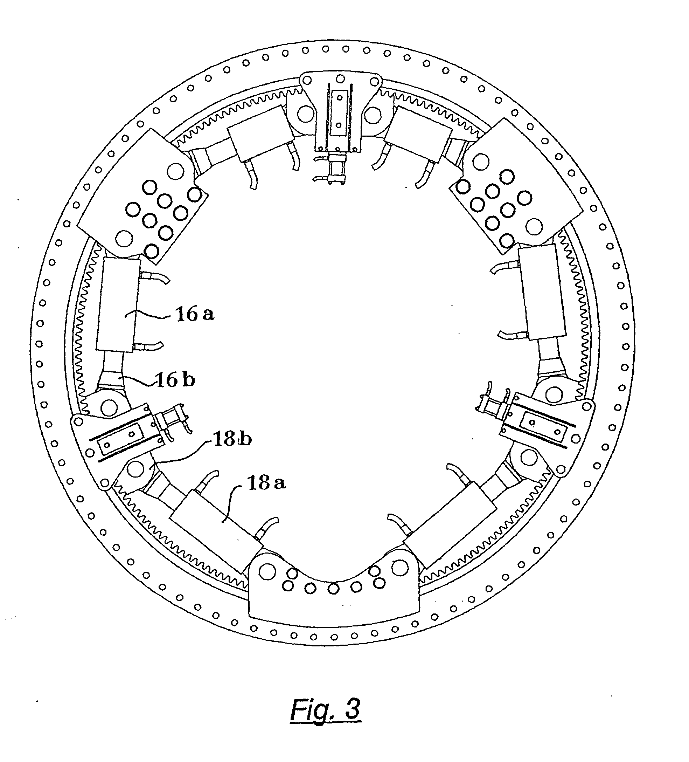

In Fig. 3 ist anhand einer Ausführung mit drei Pratzen und drei Paaren von Linearantrieben dargestellt, daß auch ohne die radialen Antriebe eine Konstruktion möglich ist, die ein Ein- und Ausfahren der Pratze bewirken kann.

## Patentansprüche

1. Windenergieanlage mit Windnachführung mit einem Turm (10), einer in einer horizontalen Ebene um diesen drehbar gelagerten, einen Rotor tragenden Gondel (12) und Mitteln zum Verstellen der Ausrichtung der Gondel (12) um die vertikale Achse des Turms (10), die einen an dem Turm (10) (oder der Gondel (12)) befestigten Formring (14) und wenigstens zwei Paare von winklig einander gegenüberstehend angeordneten Linearantrieben (16, 18) aufweisen, wobei die einen Teile (16a, 18a) der Linearantriebe (16, 18) um eine vertikale Achse verschwenkbar an die Gondel (12) (bzw. den Turm (10)) angelenkt sind und die anderen Teile (16b, 18b) der Linearantriebe (16, 18) um eine vertikale Achse verschwenkbar an ein in den Formring (14) eingreifendes Kraftübertragungselement (20) angelenkt sind,
wobei die Linearantrieben (16, 18) jeden Paares gemeinsam an ein formschlüssig in den Formring (14) eingreifendes Kraftübertragungselement (20) angelenkt sind und
**dadurch gekennzeichnet, daß**
die Paare von Linearantrieben (16, 18) dazu eingerichtet sind, das zugehörige Kraftübertragungselement (20) bei Erreichen der einen Endlage der Linearantriebe (16, 18) aus dem formschlüssigen Eingriff mit dem Formring (14) heraus zu ziehen, in die andere Endlage gefahren zu werden und das Kraftübertragungselement wieder in den formschlüssigen Eingriff mit dem Formring (14) ein zu fahren.

2. Windenergieanlage nach Anspruch 1, **dadurch gekennzeichnet, daß** jedem der Paare von Linearantrieben (16, 18) ein dritter Linearantrieb (22) zugeordnet ist, der radial auf das dem Paar von Linearantrieben (16, 18) zugehörige Kraftübertragungselement (20) wirkt.

## Claims

1. Wind power plant with orientation of the latter into the wind and having a tower (10), a gondola (12), carrying a rotor and mounted in rotary manner about the same in a horizontal plane and means for adjusting the orientation of the gondola (12) about the vertical axis of the tower (10), which have a shape ring (14) fixed to the tower (10) or the gondola (12) and at least two pairs of angularly facing linear drives (16, 18), the one parts (16a, 18a) of the linear drives (16, 18) being pivotable about a vertical axis and articulated to the gondola (12) or tower (10) and the other parts (16b, 18b) of the linear drives are pivotable about a vertical axis and articulated to a force transfer element (20) engaging in the shape ring (14), wherein the linear drives (16, 18) of each pair are jointly articulated to a force transfer element (22) positively engaging in the shape ring (14), **characterized in that** the pairs of linear drives (16, 18) are set up so that the associated force transfer element (20), on reaching one end position of the linear drives (16, 18), can be drawn out of the positive engagement with the shape ring (14) and moved into the other end position, and the force transfer element can be again moved into engagement with the shape ring (14).

2. Wind power plant according to claim 1, **characterized in that** with each of the pairs of linear drives (16, 18) is associated a third linear drive (22), which acts radially on the force transfer element (20) associated with the pair of linear drives (16, 18).

## Revendications

1. Installation pour la production d'énergie éolienne avec poursuite du vent, comportant une tour (10), une nacelle (12) qui porte un rotor et qui est logée de manière à pouvoir tourner dans un plan horizontal autour de cette tour (10), ainsi que des moyens servant à modifier le pointage de la nacelle (12) autour de l'axe vertical de la tour (10), et comprenant un anneau de forme (14) fixé à la tour (10) (ou à la nacelle(12)) et au moins deux paires d'éléments d'entraînement linéaires (16, 18) disposées sous un angle l'une en face de l'autre, alors qu'une partie (16a, 18a) des éléments d'entraînement linéaires (16, 18) est articulée à la nacelle (12) (respectivement à la tour (10)) de manière à pouvoir pivoter autour d'un axe vertical, et que l'autre partie (16b, 18b) des éléments d'entraînement linéaires (16, 18) est articulée à un élément de transmission de force (20) en prise avec l'anneau de forme (14) de manière à pouvoir pivoter autour d'un axe vertical, les éléments d'entraînement linéaires (16, 18) de chaque paire étant articulés conjointement à un élément de transmission de force (20) en prise à engagement positif dans l'anneau de forme (14), cette installation étant **caractérisée en ce que** les paires d'éléments d'entraînement linéaires (16, 18) sont aménagées de façon à extraire l'élément de transmission de force (20) qui en fait partie, de sa prise à engagement positif avec l'anneau de forme (14) lorsque l'une des positions finales des éléments d'entraînement linéaires (16, 18) est atteinte, et à être déplacées vers l'autre position finale, et à engager de nouveau l'élément de transmission de force (20) dans la prise à engagement positif avec l'anneau de forme (14).

2. Installation pour la production d'énergie éolienne suivant la revendication 1, **caractérisée en ce qu'**à chacune des deux paires d'éléments d'entraînement linéaires (16, 18) est adjoint un troisième élément d'entraînement linéaire (22) qui agit radialement sur l'élément de transmission de force (20) faisant partie de la paire d'éléments d'entraînement linéaires (16, 18).
